(19) Europäisches Patentamt
European Patent Office
Office européen des brevets

(11) Numéro de publication : **0 172 972 B1**

(12) **FASCICULE DE BREVET EUROPÉEN**

(45) Date de publication du fascicule du brevet : **22.02.89**

(51) Int. Cl.⁴ : **C 01 B 17/04**, B 01 J 21/06, B 01 D 53/36

(21) Numéro de dépôt : **84402723.5**

(22) Date de dépôt : **27.12.84**

# (54) Procédé d'élimination de l'ammoniac d'un gaz contenant de l'anhydride sulfureux.

(30) Priorité : **30.08.84 JP 179449/84**

(43) Date de publication de la demande : **05.03.86 Bulletin 86/10**

(45) Mention de la délivrance du brevet : **22.02.89 Bulletin 89/08**

(84) Etats contractants désignés : **AT BE CH DE FR GB IT LI NL SE**

(56) Documents cités :
**EP-A- 0 060 741**
**DE-A- 2 646 753**
**FR-A- 2 224 203**
**FR-A- 2 538 716**

(73) Titulaire : **RHONE-POULENC CHIMIE**
**25, quai Paul Doumer**
**F-92408 Courbevoie Cédex (FR)**

**MITSUI MIIKE KAKOKI KABUSHIKI KAISHA**
**1, Aza-Kayaba, Koumachi**
**Tochigui-shi Tochigui-ken (JP)**

(72) Inventeur : **Fujimoto, Takayuki usine de Tachigui Mitsui Miike Kakoki Kabushiki Kaisha 1 banchi Koumachi Tochigui-shi Tochigui-ken (JP)**
Inventeur : **Matsunaga, Osamu usine de Tachigui Mitsui Miike Kakoki Kabushiki Kaisha 1 banchi Koumachi Tochigui-shi Tochigui-ken (JP)**
Inventeur : **Chawanya, Susumu usine de Tachigui Mitsui Miike Kakoki Kabushiki Kaisha 1 banchi Koumachi Tochigui-shi Tochigui-ken (JP)**
Inventeur : **Shirai, Koichi usine de Tachigui Mitsui Miike Kakoki Kabushiki Kaisha 1 banchi Koumachi Tochigui-shi Tochigui-ken (JP)**
Inventeur : **Okamura, Morito usine de Tachigui Mitsui Miike Kakoki Kabushiki Kaisha 1 banchi Koumachi Tochigui-shi Tochigui-ken (JP)**
Inventeur : **Dupin, Thierry**
**5, rue Pré de la Treille**
**F-38320 Eybens (FR)**

(74) Mandataire : **Esson, Jean-Pierre**
**Rhône-Poulenc Interservices Service Brevets Chimie**
**25, quai Paul Doumer**
**F-92408 Courbevoie Cedex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 172 972 B1

Jouve, 18, rue St-Denis, 75001 Paris, France

**Description**

La présente invention porte sur l'élimination du $NH_3$ de l'ammoniac d'un gaz contenant du $SO_2$ (gaz acide), notamment par un procédé utilisant des catalyseurs à base de titane.

Jusqu'à présent, l'élimination de l'ammoniac de tels gaz était réalisée par réaction thermique ou par réaction catalytique, le catalyseur ayant en général un support d'alumine. Toutefois, ce type de catalyseur n'est pas utilisable dans une atmosphère contenant à la fois du $SO_2$ et de l'eau, car les composés sulfurés se transforment en agents contaminants et désactivent rapidement les catalyseurs.

C'est pourquoi, dans le cas de gaz contenant du $SO_2$, le recours à la réaction thermique s'imposait jusqu'ici.

On peut évoquer par ailleurs le procédé de Claus pour la récupération du soufre dans les gaz acides contenant du $SO_2$. Toutefois, dans ce procédé, si le gaz en question ne contient pas de $H_2S$ ou si la concentration de $H_2S$ y est inférieure à deux fois la concentration de $SO_2$, il ne peut être introduit dans le réacteur de Claus qu'après avoir été réduit par un gaz réducteur tel que le $H_2$ ou le CO ou par une matière carbonée, de façon à former avec une partie du $SO_2$ ou sa totalité des composés sulfurés : $H_2S$, COS, $CS_2$ ou la vapeur de soufre. Si la réduction s'opère à une température élevée située entre 500 et 1 000 °C, elle engendre du $NH_3$ à une concentration de plusieurs centaines ou plusieurs milliers de ppm. Quand des gaz Claus contenant une forte concentration de $NH_3$ sont introduits dans le réacteur, l'ammoniac réagit avec les éléments acides tels que le $SO_2$. En outre, comme la température à l'intérieur du four est dans la majorité des cas relativement basse (en-dessous de 300 °C), du sulfate d'ammonium ou du sulfate d'ammonium acide se forment et obstruent le réacteur, ce qui constitue un important obstacle à la continuité du processus.

Jusqu'ici, la méthode thermique était la seule solution permettant d'éliminer l'ammoniac des gaz Claus, et ce pour les raisons citées plus haut. Le procédé demande toutefois des équipements et notamment un four. Or, le four à chauffage direct provoque une dilution du gaz, et le four à chauffage indirect nécessite l'emploi de matériaux thermo-résistants onéreux. La méthode thermique présente donc des inconvénients non négligeables : consommation excessive d'énergie, coût élevé et complexité du procédé.

La demanderesse s'est donc efforcée de rechercher un procédé permettant l'élimination du $NH_3$ d'un gaz contenant du $SO_2$ et ne présentant pas les inconvénients décrits ci-dessus. C'est ainsi qu'il a été découvert que les catalyseurs à base de titane pouvaient être utilisés dans un tel procédé.

Ce procédé faisant appel aux catalyseurs à base de titane supprime totalement le risque d'une désactivation due aux composés sulfurés et assure la stabilité dans l'élimination du $NH_3$. Il est particulièrement efficace dans le procédé Claus de récupération du soufre des gaz contenant du $SO_2$, où il est utilisé pour éliminer l'ammoniac des gaz alimentant le convertisseur Claus. La présente invention permet donc d'éliminer l'ammoniac dans les gaz contenant du $SO_2$, et se caractérise en ce que l'élimination du $NH_3$ est effectuée à l'aide de catalyseurs à base de titane.

Les paragraphes ci-dessous décrivent l'invention de manière plus détaillée :

La préparation des catalyseurs employés peut être effectuée comme suit : l'oxyde de titane obtenu par hydrolyse de l'ilménite, du tétrachlorure de titane, etc.., est mélangé avec de l'eau et des additifs de mise en forme ; le mélange est mis en forme par extrusion, puis calciné ; une imprégnation par différents produits en fonction des besoins suit éventuellement. Les catalyseurs ayant pour support l'oxyde de titane et ceux contenant de l'oxyde de titane sont connus et les brevets ou demandes de brevets européens les concernant ont été publiés sous les numéros suivants : n° 38 741 n° 60 741, n° 39 266, n° 60 742. On préfère utiliser les catalyseurs décrits dans les brevets n° 38 741 et 60 741.

Le brevet européen n° 38 741 décrit un procédé de fabrication de catalyseurs façonnés à base d'oxyde de titane caractérisé en ce qu'il comporte les étapes suivantes :

1) On opère le malaxage d'un mélange comportant

- de 1 à 40 % environ en poids d'eau,
- de 0 à 15 % environ en poids d'additif de mise en forme,
- de 45 à 99 % environ en poids d'une poudre d'oxyde de titane mal cristallisé et/ou amorphe présentant une perte au feu comprise entre 1 et 50 %,

2) On opère la mise en forme de ce mélange,

3) On sèche éventuellement puis on calcine les produits obtenus.

Ce procédé est également caractérisé en ce que le mélange comporte de 5 à 35 % en poids d'eau, de 0,1 à 10 % en poids d'additif de mise en forme, de 55 à 94,9 % en poids de poudre d'oxyde de titane mal cristallisé et/ou amorphe.

Ce procédé est également caractérisé en ce que la perte au feu de la poudre est comprise entre 5 et 40 %.

Ce procédé est également caractérisé en ce que la poudre a été obtenue par séchage d'une suspension aqueuse d'oxyde de titane amorphe et/ou mal cristallisé.

Ce procédé est également caractérisé en ce que la suspension aqueuse provient de l'un des procédés suivants :

- attaque sulfurique de l'ilménite, hydrolyse, filtration,
- hydrolyse des composés de titane de formule $TiCl_{4-n}(OR)_n$ dans laquelle $0 < n < 4$ et R est un radical alkyl de préférence choisi parmi les radicaux : méthyle, éthyle, isopropyle, butyle, hexyle, stéaryle,

- précipitation de sels de titane par une base telle que l'ammoniac.

Ce procédé est également caractérisé en ce que la poudre d'oxyde de titane mal cristallisé et/ou amorphe est remplacée par toute substance convertible en oxyde de titane par calcination et de préférence par les acides ortho ou métatitanique ou les oxyhydroxydes de titane.

Ce procédé est également caractérisé en ce que la poudre provient d'une substance convertible en oxyde de titane à la calcination telle que les acides ortho et métatitaniques et les oxyhydroxydes de titane.

Le brevet européen n° 60 741 décrit un catalyseur caractérisé en ce qu'il comporte de l'oxyde de titane et un sulfate d'un métal alcalino-terreux choisi parmi le groupe constitué par le calcium, le barium, le strontium et le magnésium.

Ce catalyseur est également caractérisé en ce que la proportion en poids rapportée au poids du catalyseur en oxyde de titane dans le catalyseur varie entre 60 et 99 % et plus particulièrement entre 80 et 99 %.

Ce catalyseur est également caractérisé en ce que la proportion en poids rapportée au poids du catalyseur en sulfate du métal alcalino-terreux varie entre 1 et 40 % et plus particulièrement entre 1 et 20 %.

Le procédé de préparation de ce catalyseur est caractérisé en ce que l'on opère par imprégnation d'un corps façonné à base d'oxyde de titane successivement avec un composé apportant l'anion sulfate puis avec un composé apportant le cation alcalino-terreux de façon à former le sulfate du métal alcalino-terreux à l'intérieur du corps façonné à base d'oxyde de titane, puis on sèche éventuellement et on calcine le produit obtenu à une température comprise entre 300 et 900 °C et de préférence entre 350 et 800 °C ; le composé apportant l'anion sulfate est choisi parmi le groupe comportant l'acide sulfurique et les sulfates solubles en solution aqueuse et en particulier parmi le sulfate d'ammonium et le sulfate d'hydroxylamine ; l'imprégnation est réalisée de telle façon que le rapport en poids entre $SO_4$ et $TiO_2$ soit généralement compris entre 0,01 et 0,15 et de préférence entre 0,05 et 0,10 ; le composé apportant le cation alcalino-terreux est choisi dans le groupe des sels d'alcalino-terreux solubles en solution aqueuse et en particulier parmi les nitrates, chlorures, acétates des métaux alcalino-terreux ; l'imprégnation est réalisée de telle façon que le rapport en poids entre l'alcalino-terreux et l'oxyde de titane soit généralement compris entre 0,004 et 0,20 et de préférence entre 0,02 et 0,15.

Le procédé de préparation du catalyseur est également caractérisé en ce que l'on opère la mise en forme d'un mélange contenant, d'une part, de l'oxyde de titane et, d'autre part, le sulfate du métal alcalino-terreux ou le mélange d'un composé apportant l'anion sulfate et d'un composé apportant le cation alcalino-terreux ou le mélange d'un composé apportant l'anion sulfate et d'un composé apportant le cation alcalino-terreux ; on opère selon les étapes suivantes :

a) On opère le malaxage d'un mélange comportant :

- de 1 à 40 % en poids d'eau
- de 0 à 15 % en poids d'additif de mise en forme,
- de 45 à 99 % en poids d'une poudre présentant une PAF comprise entre 1 et 50 % et constituée d'oxyde de titane mal cristallisé et/ou amorphe et du sulfate du métal alcalino-terreux ou du mélange du composé apportant le sulfate qui est choisi parmi le groupe comportant l'acide sulfurique et les sulfates solubles en solution aqueuse et du composé apportant le cation alcalino-terreux qui est choisi parmi le groupe des sels d'alcalino-terreux solubles en solution aqueuse : le rapport en poids dans la poudre entre $SO_4$ et $TiO_2$ est compris entre 0,01 et 0,15 et de préférence entre 0,05 et 0,10 et le rapport en poids entre l'alcalino-terreux et l'oxyde de titane est compris entre 0,004 et 0,20 et de préférence entre 0,02 et 0,15 ;

b) On opère la mise en forme du mélange ;

c) On sèche éventuellement, puis on calcine les produits obtenus à une température comprise entre 300 et 900 °C et de préférence entre 350 et 800 °C.

Ce procédé de préparation du catalyseur est également caractérisé en ce que :

a) On opère le malaxage d'un mélange comportant

- de 1 à 40 % en poids d'eau,
- de 0 à 15 % en poids d'additif de mise en forme,
- de 45 à 99 % en poids d'une poudre constituée d'un composé apportant le cation alcalino-terreux et d'oxyde de titane provenant de l'attaque sulfurique de l'ilménite et contenant des anions sulfates, le rapport en poids dans la poudre entre $SO_4$ et $TiO_2$ étant compris entre 0,01 et 0,15 et de préférence entre 0,05 et 0,10, le rapport en poids dans la poudre entre l'alcalino-terreux et l'oxyde de titane étant compris entre 0,004 et 0,20 et de préférence entre 0,02 et 0,15 ; la perte au feu de cette poudre étant comprise entre 1 et 50 %.

b) On opère la mise en forme du mélange.

c) On sèche éventuellement, puis on calcine les produits obtenus à une température comprise entre 300 °C et 900 °C et de préférence entre 350 et 800 °C.

Le procédé de préparation du catalyseur est également caractérisé en ce que :

a) On opère le malaxage d'un mélange comportant :

- de 1 à 40 % en poids d'eau,
- de 0 à 15 % en poids d'additif de mise en forme,
- de 45 à 99 % en poids d'une poudre d'oxyde de titane provenant de l'attaque sulfurique de l'ilménite et contenant des anions sulfates, le rapport en poids dans la poudre entre $SO_4$ et $TiO_2$ étant compris entre 0,01 et 0,15 et de préférence entre 0,05 et 0,10 ; la PAF de cette

poudre étant de préférence comprise entre 1 et 50 % ;

b) On opère la mise en forme du mélange, puis on sèche et on calcine éventuellement à une température comprise entre 300 °C et 900 °C et de préférence entre 350 °C et 800 °C ;

c) On imprègne le produit façonné avec un composé soluble en solution aqueuse apportant le cation alcalino-terreux ;

d) On sèche éventuellement, puis on calcine les produits obtenus à une température comprise entre 300 et 900 °C et de préférence entre 350 et 800 °C.

Le procédé de préparation du catalyseur est également caractérisé en ce que l'on opère la sulfatation d'un corps façonné à base d'oxyde de titane et contenant le cation alcalino-terreux ; cette sulfatation est réalisée à une température comprise entre 250 et 550 °C par un gaz contenant de préférence un mélange d'anhydride sulfureux et d'air, les rapports en poids $SO_4/TiO_2$ étant compris entre 0,01 et 0,15 et alcalino-terreux/$TiO_2$ entre 0,004 et 0,20 ; les produits sont ensuite éventuellement séchés puis calcinés à une température comprise entre 300 et 900 °C et de préférence entre 350 et 800 °C.

En outre, les catalyseurs de l'invention et en particulier les catalyseurs décrits dans les brevets n° 38 741 et 60 741 peuvent contenir de préférence jusqu'à 30 % en poids d'un constituant choisi parmi la silice, l'alumine, les argiles, les silicates, le sulfate de titane, les fibres céramiques.

Les catalyseurs les mieux adaptés au procédé sont ceux dont le $TiO_2$ représente plus de 60 % du poids, et plus particulièrement ceux qui ont été préparés spécifiquement pour la réaction Claus. Ils peuvent être préparés selon le procédé décrit dans les brevets ou demandes de brevets précités.

La concentration souhaitable en volume de $SO_2$ des gaz traités selon l'invention se situe audessus de 0,5 %, et ce pour que l'activité catalytique puisse être durablement maintenue. La température préférée pour la réaction se situe entre 500 et 800 °C, car en-dessous de 500 °C, il y a baisse du taux d'élimination du $NH_3$ et l'opération perd son intérêt, et au-dessus de 800 °C, il faut chauffer le gaz à l'entrée (puisqu'il sort du processus précédent à 800 °C environ), ce qui est peu avantageux sur le plan économique. Quant à la vvh elle se situera de préférence entre 500 et 4 000/h. En effet, un taux inférieur à 500/h est peu rentable dans la mesure où on ne peut s'attendre à une amélioration de l'élimination de $NH_3$ et le seuil de 4 000/h représente la durée de contact minimum.

On décrit ci-après une mise en oeuvre particulièrement préférée de l'invention.

L'essai suivant a été réalisé aux fins d'études des rapports entre la température du lit du catalyseur et le taux d'élimination de $NH_3$ par le procédé de l'invention. Un tube de réaction doté d'un dispositif de chauffage a été rempli d'un catalyseur à base de titane, et le taux d'élimination de $NH_3$ a été calculé par l'analyse de la composition des gaz à l'entrée et à la sortie du tube. L'essai a été conduit dans les conditions suivantes :

Catalyseur employé : Catalyseur (I) décrit ci-dessous

Volume de remplissage : 75 ml

Gaz à l'entrée : $SO_2$ 0-10 % vol. $NH_3$ 1 000-3 000 ppm autres composants : $N_2$, $H_2O$, $CO_2$, $O_2$, etc.

Préparation du catalyseur (I) :

Une suspension obtenue après hydrolyse du tétrachlorure de titane est lavée par décantation, filtrée, puis séchée en étuve à 100 °C pendant 24 heures, ce qui donne une poudre.

On opère pendant 30 minutes un malaxage du mélange constitué par cette poudre additionnée d'eau et de carboxyméthylcellulose dans les proportions suivantes :

- 66 % de poudre
- 32 % d'eau
- 2 % de carboxylméthylcellulose

Le mélange est ensuite extrudé au travers d'une filière de 3 mm, les extrudés sont séchés à 100 °C pendant 8 heures, puis calcinés à 450 °C pendant 2 heures.

Un kilogramme de produit est d'abord imprégné par 310 cm³ d'une solution de sulfate d'ammonium de manière à obtenir un rapport en poids $SO_4/TiO_2 = 0,06$ séché à 100 °C pendant 4 heures.

On imprègne ensuite les produits séchés par 300 $cm_3$ d'une solution de nitrate de calcium de manière à obtenir un rapport en poids $Ca/TiO_2 = 0,025$.

Le produit est séché à 110 °C pendant 12 heures, puis calciné à 450 °C pendant 1 heure.

Les résultats de cet essai sont indiqués par la ligne continue sur la figure 2, où l'abcisse représente la température de la réaction, et l'ordonnée le taux d'élimination de $NH_3$ (en pourcentage). A titre comparatif, les résultats obtenus par simple chauffage sans le catalyseur sont indiqués par la ligne en pointillé.

Nous décrivons ci-dessous une application de l'invention dans le traitement d'un gaz contenant du $SO_2$ par le procédé Claus pour la récupération du soufre.

La figure 1 illustre le schéma correspondant audit traitement. Les chiffres indiquent les éléments suivants :

1. Conduite d'arrivée du gaz contenant du $SO_2$
2. Conduite du gaz réduit
3. Agent réducteur
4. Evacuation du réducteur
5. Four réducteur
6. Réacteur catalytique du $NH_3$
7. Catalyseur à base de titane remplissant le réacteur 6
8. Régulateur de pression
9. 10. Dispositifs de commande du réacteur catalytique du $NH_3$

11. Conduite du gaz alimentant le convertisseur Claus
12. Convertisseur Claus
13. Gaz résiduel
14. Air ou oxygène

Le gaz à traiter, qui contient du $SO_2$, est mélangé avec de l'air ou de l'oxygène et introduit dans le four réducteur 5 par la conduite 1. Le $SO_2$ dans le gaz réagit à l'intérieur du four avec l'agent réducteur (en l'occurrence, une matière carbonée) et forme du $H_2S$ ou d'autres composés réduits. A l'issue de cette réaction, l'agent réducteur, qui contient des cendres, est évacué par 4. Le gaz réduit dans le four 5 est acheminé par la conduite 2 vers le réacteur catalytique du $NH_3$ (6), où un passage à travers le lit du catalyseur permet d'éliminer le $NH_3$. La réaction qui intervient est la suivante :

$$4\ NH_3 + 3\ SO_2 \rightleftharpoons 3\ S + 6\ H_2O + 2\ N_2$$

On utilise généralement un ou plusieurs réacteurs.

La figure 1 montre un exemple avec 2 réacteurs (6), commandés par les dispositifs 9 et 10, et qui sont utilisés alternativement pour parer à l'obstruction du lit du catalyseur 7 par le gaz réduit 5 qui contient de la poussière. Le régulateur 8 surveille la pression à l'intérieur du réacteur 6, et lorsque celle-ci augmente, on procède à la permutation des catalyseurs 7 par le biais du dispositif de commande 9. Puis, le lit du catalyseur 7 est lavé par courant inversé et débarrassé de la poussière. Toutefois, si l'on utilise un réducteur gazeux tel que l'hydrogène ou tout autre réducteur qui ne génère pas de poussière, ou si le catalyseur est présenté sous une forme appropriée dans le cas d'un gaz poussiéreux (forme cylindrique, en nids d'abeilles, etc..), un seul réacteur suffit et le dispositif de permutation est superflu.

Le gaz 11 débarrassé du $NH_3$ est acheminé vers le convertisseur Claus 12. Après récupération du soufre à l'intérieur de celui-ci, le gaz résiduel est acheminé vers le processus suivant.

Les paragraphes suivants donnent une description plus détaillée de la méthode à l'aide de quelques exemples de mise en œuvre :

Exemple 1

Dans un dispositif agencé selon la figure 1, le coke est utilisé comme agent réducteur 3 dans le four 5. Le gaz réduit ainsi obtenu est traité dans le réacteur catalytique de $NH_3$ (6). Les paramètres du gaz et de la réaction catalytique sont les mêmes dans tous les exemples de mise en oeuvre. La composition du gaz est indiquée en % volumique.

Composition du gaz réduit :

| | |
|---|---|
| $H_2S$ 4,8-5,0 % | $CO_2$ 6-8,2 % |
| $SO_2$ 2,6-2,8 % | $O_2$ 0,3-0,5 % |
| COS 1,3-1,5 % | $S_2$ 2-3 % |
| $H_2O$ 5-20 % | $N_2$ le restant |
| $NH_3$ 1 500-2 000 ppm | poussière : 2,5-3,5 g/$Nm^3$ |

Paramètres du gaz réduit :

température : 650-750 °C
débit : 30-32 $Nm^3$/h

Paramètres de la réaction catalytique du $NH_3$ :

vvh : 800/h
Température : 600-700 °C
Catalyseurs : (I)-(V)
Durée de l'opération : 500 h

Avec le catalyseur (I), préparé selon le protocole décrit plus haut, la concentration de $NH_3$ obtenue à l'issue du traitement était de 100-500 ppm (taux d'élimination de $NH_3$ : 70-90 %), aucune séparation de sulfate d'ammonium et aucune diminution de l'activité catalytique n'ont été relevées.

Des résultats similaires ont été obtenus avec chacun des catalyseurs (II), (III), (IV) et (V) préparés selon les protocoles ci-dessous qui donnent le mode de préparation des catalyseurs.

Exemple II — Catalyseur (II)

Une suspension d'oxyde de titane obtenue après hydrolyse et filtration dans le procédé classique d'attaque sulfurique de l'ilménite est séchée par passage dans un échangeur de chaleur.

On prépare par malaxage pendant 20 minutes un mélange contenant :

- 69 % de cette poudre
- 30,8 % d'eau
- 0,2 % de polyacrilamide

Ce mélange est introduit dans une extrudeuse et filé au travers d'une filière de diamètre 5 mm. Les extrudés obtenus sont séchés à 110 °C pendant 24 heures puis calcinés a 350 °C pendant 2 heures au four électrique sous air.

Exemple III — Catalyseur (III)

Une suspension d'oxyde de titane obtenue après hydrolyse et filtration dans le procédé classique d'attaque sulfurique de l'ilménite est séchée, et la poudre ainsi obtenue est malaxée pendant 40 minutes en présence d'eau, de polyacrilamide et d'acide métatungstique.

Le mélange est extrudé au travers d'une filière de 3 mm. Les extrudés sont séchés à 110 °C pendant 24 heures, puis calcinés à 500 °C pendant 2 heures.

Exemple IV — Catalyseur (IV)

Une suspension d'oxyde de titane obtenue après hydrolyse et filtration dans le procédé classique d'attaque sulfurique de l'ilménite est séchée à 180 °C pendant 1 heure.

On malaxe la poudre obtenue pendant 2 heures 30 minutes en présence d'eau et de nitrate de

baryum, dans les proportions suivantes :

- 64 % de poudre
- 8 % de nitrate de baryum
- 28 % d'eau

Le mélange est extrudé au travers d'une filière de 5 mm, les extrudés sont séchés à 110 °C pendant 4 heures, puis calcinés à 500 °C pendant 1 heure.

Exemple V — Catalyseur (V)

A une suspension d'oxyde de titane obtenue après hydrolyse et filtration dans le procédé classique d'attaque sulfurique de l'ilménite, on incorpore du nitrate de calcium de manière à faire réagir tous les sulfates. Le rapport en poids $Ca/TiO_2$ est alors de 0,033. La suspension est séchée à 150 °C pendant 1 heure.

La poudre obtenue est malaxée pendant 2 heures en présence d'eau dans les proportions suivantes :

- 74 % de poudre,
- 26 % d'eau

Le mélange est ensuite extrudé au travers d'une filière de 4 mm ; les extrudés sont séchés à 110 °C pendant 4 heures, puis calcinés à 400 °C pendant 2 heures.

Ces extrudés sont imprégnés par une solution d'acide métatungstique, et séchés à 150 °C pendant 4 heures ; ils sont de nouveau imprégnés par une solution d'acétate de néodymium/praséodymium, séchés à 150 °C pendant 4 heures, puis calcinés à 450 °C pendant 2 heures.

Exemple comparatif

Un essai témoin a été conduit dans les mêmes conditions que les exemples de mise en oeuvre présentés ci-dessus, à l'exception du catalyseur utilisé, dont le support était l'alumine. La figure 3 indique le taux d'élimination de $NH_3$ en fonction de la durée de l'alimentation en gaz (en minutes) dans cet essai. Comme le montre clairement cette figure, le catalyseur a été désactivé en moins d'une heure de fonctionnement, ce qui a ramené la concentration de $NH_3$ à la sortie au même niveau qu'à l'entrée du processus. Le phénomène est attribuable à la contamination continue du catalyseur à support d'alumine par des composés sulfurés, et la régénération était impossible.

Catalyseur employé : support-alumine
support-nickel

Les figures ci-après illustrent les aspects suivants de l'invention :

Figure 1 : diagramme d'un exemple de mise en oeuvre de l'invention en vue de l'élimination du $NH_3$ dans les gaz contenant du $SO_2$ par le procédé Claus de récupération soufre.

Figure 2 : graphique indiquant le rapport entre la température de la réaction et le taux d'élimination de l'ammoniac dans un exemple de mise en œuvre de l'invention.

Figure 3 : graphique indiquant la perte de capacité d'élimination du $NH_3$ d'un catalyseur à support d'alumine en fonction de la durée d'alimentation en gaz au cours de l'essai comparatif.

**Revendications**

1. Procédé d'élimination de l'ammoniac d'un gaz contenant de l'anhydride sulfureux caractérisé en ce que l'on opère à une température comprise entre 500 et 800 °C en présence d'un catalyseur à base de titane.

2. Procédé selon la revendication 1 caractérisé en ce que le catalyseur comporte de l'oxyde de titane et un sulfate d'un métal alcalino-terreux choisi parmi le groupe constitué par le calcium, le barium, le strontium et le magnésium.

3. Procédé selon la revendication 1 caractérisé en ce que l'oxyde de titane représente plus de 60 % en poids du catalyseur.

4. Procédé selon la revendication 1 caractérisé en ce que le catalyseur contient jusqu'à 30 % en poids d'un constituant choisi parmi la silice, l'alumine, les argiles, les silicates, le sulfate de titane, les fibres céramiques.

**Claims**

1. A process for the removal of ammonia from a gas containing sulphur dioxide, characterised in that it is carried out at a temperature between 500 and 800 °C in the presence of a titanium-based catalyst.

2. A process according to Claim 1, characterised in that the catalyst incorporates titanium oxide and a sulphate of an alkaline-earth metal chosen from the group consisting of calcium, barium, strontium and magnesium.

3. A process according to Claim 1, characterised in that titanium oxide represents over 60 % by weight of the catalyst.

4. A process according to Claim 1, characterised in that the catalyst contains up to 30 % by weight of a component chosen from silica, alumina, clays, silicates, titanium sulphate and ceramic fibres.

**Patentansprüche**

1. Verfahren zur Entfernung von Ammoniak aus einem Gas enthaltend Schwefligsäureanhydrid ($SO_2$) dadurch gekennzeichnet, daß man bei einer Temperatur zwischen 500 und 800 °C in Gegenwart eines Katalysators auf Basis von Titan arbeitet.

2. Verfahren nach Anspruch 1, dadurch gekennzeichnet, daß der Katalysator Titanoxid enthält und ein Sulfat eines Erdalkalimetalls, ausgewählt aus der Gruppe bestehend aus Calcium, Barium, Strontium und Magnesium.

3. Verfahren nach Anspruch 1, dadurch gekennzeichnet, daß das Titanoxid mehr als 60

Gew.% des Katalysators ausmacht.

4. Verfahren nach Anspruch 1, dadurch gekennzeichnet, daß der Katalysator bis zu 30 Gew.% eines Bestandteils ausgewählt aus Siliciumdioxid, Aluminiumoxid, den Tonen, den Silikaten, Titansulfat und den keramischen Fasern enthält.

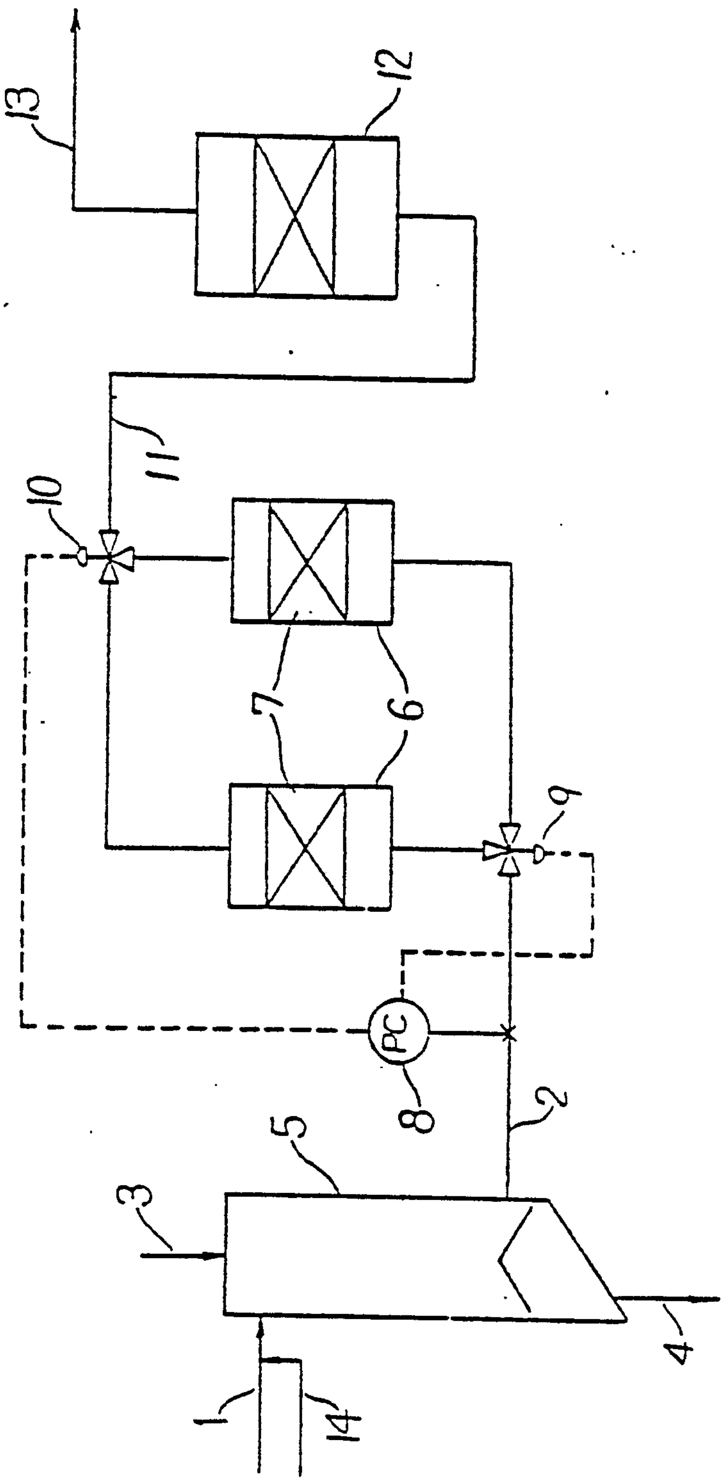


FIGURE 1

FIGURE 2

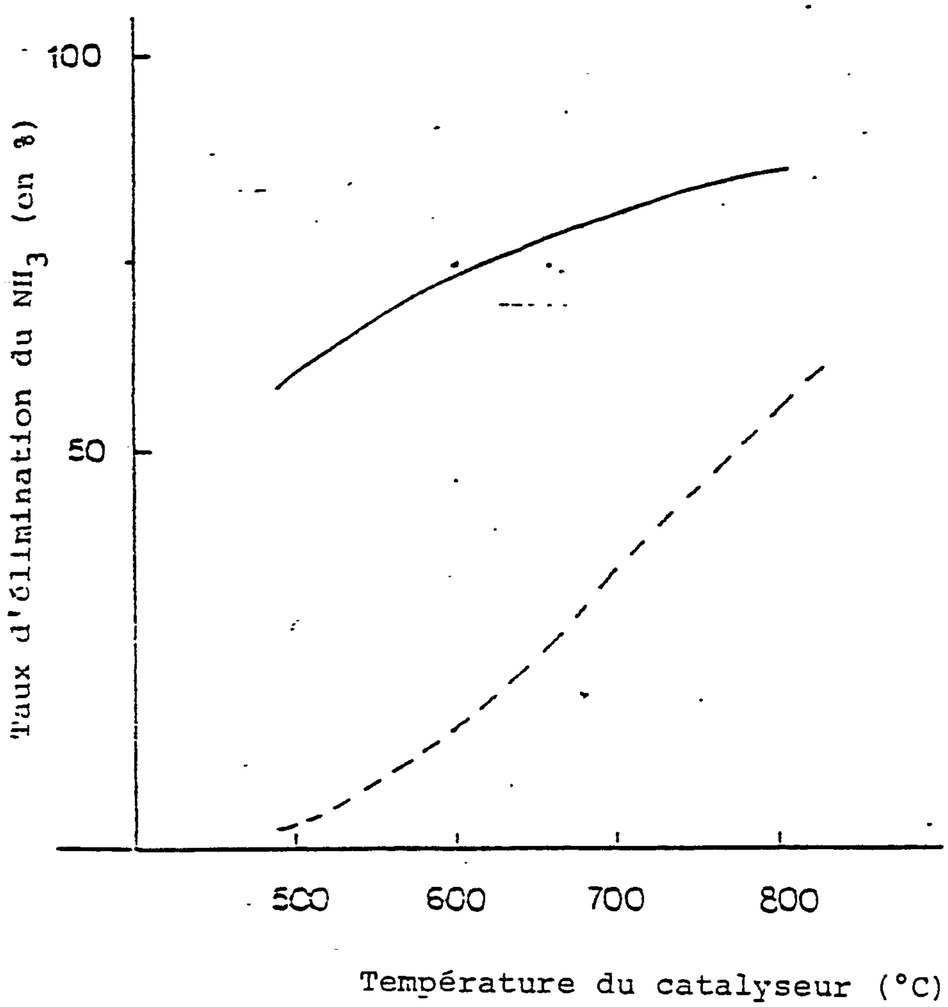
100
50
Taux d'élimination du $NH_3$ (en %)
500
600
700
800
Température du catalyseur (°C)

FIGURE 3

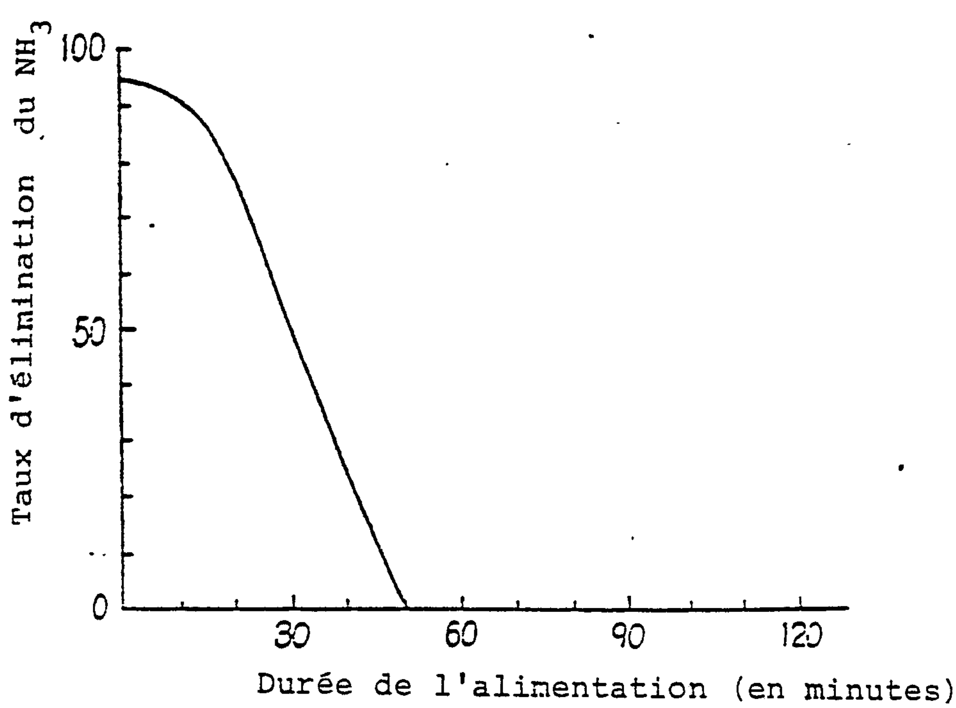
Taux d'élimination du $NH_3$
100
50
0
30
60
90
120
Durée de l'alimentation (en minutes)